# EUROPÄISCHE PATENTSCHRIFT

(11) **EP 3 900 130 B1**
(45) Veröffentlichungstag und Bekanntmachung des Hinweises auf die Patenterteilung: **17.04.2024**
(21) Anmeldenummer: 19817128.2
(22) Anmeldetag: 27.11.2019
(51) Int. Cl.: H02B 3/00, H02B 1/20, H02G 1/12

(54) **VERFAHREN ZUR VERDRAHTUNG VON ELEKTRISCHEN KOMPONENTEN EINER AUF EINER MONTAGEPLATTE ANGEORDNETEN ELEKTRISCHEN SCHALTANLAGE**
METHOD FOR CABLING OF ELECTRICAL COMPONENTS OF A SWITCHGEAR MOUNTED ON A MOUNTING PLATE
MÉTHODE DE CÂBLAGE DE COMPOSANTS ÉLECTRIQUES D'UN CIRCUIT DE COMMUTATION DISPOSÉ SUR UNE PLATINE DE MONTAGE

(30) Priorität: 21.12.2018 DE 102018133337
(43) Veröffentlichungstag der Anmeldung: 27.10.2021
(73) Patentinhaber: Rittal GmbH & Co. KG, 35745 Herborn (DE)
(72) Erfinder: BÄCHLER, Andreas Michael, 35708 Haiger (DE)
(74) Vertreter: Angerhausen, Christoph
(86) Internationale Anmeldenummer: PCT/DE2019/101019
(87) Internationale Veröffentlichungsnummer: WO 2020/125852

(56) Entgegenhaltungen:
- EP-A2- 0 924 818
- WO-A1-2018/184832
- CN-U- 207 938 955
- DE-A1-102015 103 444
- US-A1- 2018 108 458
- M. BUSI ET AL: "The WIRES Experiment: Tools and Strategies for Robotized Switchgear Cabling", PROCEDIA MANUFACTURING, Bd. 11, 1. Januar 2017 (2017-01-01), Seiten 355-363, XP055539776, 43rd North American Manufacturing Research Conference, NAMRC 43, 8-12 June 2015, UNC Charlotte, North Carolina, United States ISSN: 2351-9789, DOI: 10.1016/j.promfg.2017.07.118
- System Robot Automazione: "Syndy, The independent solution", , 31. März 2012 (2012-03-31), Seiten 1-16, XP055539797, Visano, Italy Gefunden im Internet: URL:http://www.systemrobot.it/en/crlines/w iring-syndy [gefunden am 2019-01-09]
- Anonymous: "Schaltschrankbau- Unterverteilung und Gehäuse Automatisches Verdrahten | Schaltschrankbau- Unterverteilung und Gehäuse", , 22 June 2015 (2015-06-22), XP055672878, Retrieved from the Internet: URL:https://www.schaltschrankbau-magazin.d e/artikel/automatisches-verdrahten/print/ [retrieved on 2020-03-02]

## Beschreibung

Die Erfindung betrifft ein Verfahren zur Verdrahtung von elektrischen Komponenten einer auf einer Montageplatte angeordneten elektrischen Schaltanlage.

Bei der Fertigung von Schalt- und Steuerungsanlagen ist die Verdrahtung der elektrischen Komponenten einer der zentralen und zeitintensivsten Arbeitsvorgänge, der bis heute weitestgehend manuell durchgeführt wird. Dabei stellt nicht nur die hohe Komplexität dieses Arbeitsvorgangs, sondern vor allem auch der Anspruch einer hundertprozentigen Fehlerfreiheit große Anforderungen an den die Verdrahtung durchführenden Mitarbeiter.

Für die Optimierung des Verdrahtungsvorgangs gibt es verschiedene technische Hilfsmittel in unterschiedlichen Unterstützungsstufen. Dies reicht von Handwerkzeugen und/oder Halbautomaten zur Kabelkonfektionierung bis hin zu vollautomatischen Anlagen, die einzelne Drähte vollständig konfektionieren, das heißt, ablängen, abisolieren, Aderendhülse aufbringen und vercrimpen. Die so hergestellten vorkonfektionierten Kabel können anschließend als loser und einzelner Draht, als sequentiell miteinander verbundene oder aufgereihte Drähte oder als Drahtbündel ausgegeben werden. Eine auf eine Rolle aufgewickelte Kabelsequenz ist aus der DE 10 2015 103 444 A1 bekannt. Die BE 101 965 1 A beschreibt einen multifunktionalen Bearbeitungskopf, der in den Endeffektor einer Verdrahtungsanlage integriert ist. Die DE 44 31 254 A1 und EP 0917259 B1 beschreiben jeweils ein Verfahren und eine Vorrichtung zum Verdrahten von Anschlussstellen von Komponenten elektrischer Geräte. Die EP 0259394 B1 beschreibt ein Werkzeug zum Verlegen von Kabeln.

M. BUSI ET AL, "The WIRES Experiment: Tools and Strategies for Robotized Switchgear Cabling", PROCEDIA MANUFACTURING, Band 11, 01. Januar 2017 (2017-01-01), Seite 355-363, XP055539776 beschreibt ein Verfahren zur Verdrahtung von Komponenten einer elektrischen Schaltanlage, bei der anhand herstellerseitiger CAD-Daten elektrischer Komponenten eine Komponentenerkennung von auf einer Montageplatte vormontierter elektrischer Komponenten durchgeführt wird. Anhand der CAD-Daten und der Positionsdaten werden Kabellängen und ein Verdrahtungsweg abgeleitet.

Ein ähnliches Systeme und Verfahren ist auch aus der folgenden Veröffentlichung bekannt: System Robot Automazione, "Syndy, The independent solution", Visano, Italy 31. März 2012 (2012-03-31), Seite 1-16, XP055539797.

Die Veröffentlichung "Schaltschrankbau-Unterverteilung und Gehäuse, automatisches Verdrahten", 22. Juni 2015, abgerufen von: URL:https://www.schaltschrankbau-magazin.de/artikel/automatischesverdrahten/print/; XP055672878 beschreibt ein Verfahren zur robotergestützten Verdrahtung von elektrischen Komponenten einer auf einer Montageplatte angeordneten elektrischen Schaltanlage gemäß dem Oberbegriff des Anspruchs 1.

Es ist daher die Aufgabe der Erfindung, ein Verfahren der eingangs beschriebenen Art derart weiter zu entwickeln, dass es einen möglichst hohen Automatisierungsgrad aufweist.

Diese Aufgabe wird durch ein Verfahren mit den Merkmalen des Anspruchs 1 gelöst. Die abhängigen Ansprüche betreffen jeweils vorteilhafte Ausführungsformen der Erfindung.

Die Planung der Schaltanlage, das heißt insbesondere die Ortsinformation und Orientierungsinformation über die Mehrzahl elektrischer Komponenten der Schaltanlage sowie die die Verdrahtung der Komponenten betreffende Verdrahtungsinformation können beispielsweise direkt aus einem 3D-ECAD-System bereitgestellt werden. Über dieses System können auch ergänzende Informationen betreffend die elektrische Schaltanlage, soweit sie die Verdrahtung unterstützen können, bezogen werden. Diese Informationen können beispielsweise eine individuelle Konfektionierung einzelner Kabel der Verdrahtung umfassen. Das Bestimmen eines Automatisierungsgrades der Verdrahtung kann das Bestimmen einer Automatisierungstauglichkeit einzelner Verdrahtungsschritte, bei denen jeweils zwei elektrische Komponenten der elektrischen Schaltanlage miteinander verdrahtet werden, umfassen.

Das optische Erfassen weist eine Präsenzprüfung der Mehrzahl elektrischer Komponenten der Schaltanlage auf, indem das optische Erfassen eine Komponentenerkennung der Komponenten der tatsächlichen Anordnung der elektrischen Komponenten und einen Abgleich der erkannten Komponenten mit der Mehrzahl elektrischer Komponenten der Schaltanlage gemäß der Planung aufweist.

Das Bereitstellen der Planung und das Anwenden der Prüfroutine auf die Verdrahtungsinformation sowie gegebenenfalls das Anpassen der Verdrahtungsinformation zur Maximierung des Automatisierungsgrades kann computergestützt und daher grundsätzlich ortsungebunden ausgeführt werden und muss daher nicht zwangsläufig auf einem beispielsweise für die Verdrahtung vorgesehenen Verdrahtungsautomaten durchgeführt werden. Die angepassten Verdrahtungsinformationen können beispielsweise durch manuelles Aufrufen an einem Verdrahtungsautomaten oder durch automatische Identifikation mittels Einlesen eines Produktidentifizierungscodes, beispielsweise eines RFID-Chips, auf die Verdrahtungsanlage importiert werden.

Das optische Erfassen einer tatsächlichen Anordnung der elektrischen Komponenten auf der Montageplatte kann das Abscannen einer Montageebene der Montageplatte, auf welcher die elektrischen Komponenten angeordnet sind, umfassen. Das Abscannen kann mit Hilfe eines Roboters durchgeführt werden, beispielsweise mit Hilfe eine Knickarmroboters, der einen multifunktionalen Endeffektor mit einer optischen Erfassungseinrichtung, beispielsweise einer Kamera oder eines Scanners aufweist. Der Knickarmroboter kann mit der Kamera die Montageplattenebene zeilenweise abscannen. Die Kamera kann auch unbeweglich oder beweglich über der Montageplatte angeordnet sein. Mit Hilfe der optisch erfassten tatsächlichen Anordnung der elektrischen Komponenten können Ist-Daten über die örtliche Anordnung der elektrischen Komponenten auf der Montageplattenebene erfasst und mit den in der Planung der Schaltanlage enthaltenen Soll-Daten, den Ortsinformation und Orientierungsinformation der Planung, abgeglichen werden. Es kann vorgesehen sein, dass bei Überschreiten eines Toleranzwertes für die örtliche Anordnung einer oder mehrerer Komponenten eine Anpassung der Ortsinformation und Orientierungsinformation an die tatsächliche Anordnung der Komponenten durchgeführt wird. Das optische Erfassen der tatsächlichen Anordnung der elektrischen Komponenten kann das optische Erfassen einer individuellen Kennzeichnung der elektrischen Komponenten umfassen. Die Identifizierung der elektrischen Komponenten kann jedoch auch mit Hilfe gängiger Methoden der Bilderkennung erfolgen, bei denen aus der Geometrie der erfassten Komponenten und einer relativen Anordnung verschiedener Komponenten zueinander auf der Montageebene auf individuelle Komponenten der elektrischen Schaltanlage geschlossen wird.

Das Verfahren weist weiterhin das Anwenden einer Prüfroutine auf die Verdrahtungsinformation zur Bestimmung eines Automatisierungsgrades der Verdrahtungen und gegebenenfalls das Anpassen der Verdrahtungsinformation zur Maximierung des Automatisierungsgrads aufweisen, wobei das automatisierte Verdrahten der elektrischen Komponenten entsprechend der angepassten Verdrahtungssituation erfolgt. Das Verfahren kann weiterhin das Rückmelden mindestens einer nicht automatisierbaren Verdrahtung an die Planung, beispielsweise ein ECAD-System aufweisen. Daraufhin kann nicht automatisierbare Verdrahtung derart angepasst werden, dass sie automatisierbar ist. Dies kann das Auswählen eines alternativen Kabelroutings oder einer alternativen elektronischen Komponenten umfassen, etwa einer Komponente, die eine für einen Knickarmroboter frei zugängliche Kabelanschlussklemme aufweist.

Das automatisierte Verdrahten kann weiterhin das Abnehmen eines vorkonfektionierten oder eines unkonfektionierten Kabels mit einem Roboter, vorzugsweise mit einem Knickarmroboter, von einer Übergabeschnittstelle zur Bereitstellung vorkonfektionierter oder unkonfektionierter Kabel aufweisen. Die Übergabeschnittstelle kann eine Ausgabe eines Kabelkonfektionierungsautomaten sein, oder eine gesonderte Einrichtung, auf oder an der eine Kabelsequenz aus einzeln vorkonfektionierten Kabeln in einer Verdrahtungsreihenfolge definiert angeordnet sind oder bereitgestellt werden, um sie maschinell und vollautomatisch, etwa mit Hilfe eines Roboters, aus oder von der Einrichtung abnehmen zu können.

Alternativ oder zusätzlich kann das automatisierte Verdrahten das Abnehmen eines zumindest teilweise vorkonfektionierten oder eines unkonfektionierten Kabels mit einem Roboter, vorzugsweise mit einem Knickarmroboter, von einer Übergabeschnittstelle für die Übergabe der zumindest teilweise vorkonfektionierten oder unkonfektionierten Kabel aufweisen. Dabei kann das Abnehmen des zumindest teilweise vorkonfektionierten Kabels das Abnehmen eines auf eine bestimmte Länge abgelängten Kabels von der Übergabeschnittstelle eines Kabelablängautomaten aufweisen. Das Verfahren kann nach dem Abnehmen des Kabels von der Übergabeschnittstelle das Konfektionieren mindestens eines zumindest teilweise vorkonfektionierten oder eines unkonfektionierten Endes des Kabels aufweisen, wozu das Kabelende mit dem Roboter einem Kabelendbearbeitungsautomaten zugeführt und von diesem nach erfolgter Kabelendbehandlung wieder entnommen wird.

Der Roboter kann einen multifunktionalen Endeffektor mit einem optischen System für die Lokalisierung der tatsächlichen Ist-Positionen von Kabeln und/oder elektrischen Komponenten beziehungsweise zur Erfassung von Verdrahtungspositionen auf der Montageplatte aufweisen. Der Endeffektor kann weiterhin einen Greifer mit einer integrierten Sensorik für die Aufnahme einzelner Drähte sowie für das Kontaktieren, das Verlegen und für das Durchführen einer Abzugkontrolle aufweisen. Der Endeffektor kann weiterhin ein Werkzeug für die elektrische Prüfung der kontaktierten Drahtverbindung aufweisen, beispielsweise ein Ohmmeter oder einen Stromdurchgangsmesser.

Die Verwendung eines Knickarmroboters mit einem multifunktionalen Endeffektor ermöglicht die Aufnahme, Zuführung und Kontaktierung von Kabeln in vertikaler Richtung in Bezug auf die Montageebene der Montageplatte, in horizontaler Richtung, das heißt parallel zur Montageebene der Montageplatte, oder aber auch in jedem schrägen Winkel zwischen den beiden zuvor genannten Ausrichtungen, das heißt beispielsweise in einem Winkelbereich zwischen 1° und 89° in Bezug auf die Montageebene der Montageplatte. Der Knickarmroboter kann ein einarmiger oder ein zweiarmiger Knickarmroboter sein, wobei der zweiarmige Knickarmroboter als zwei separate Roboter realisiert oder ein einziger, zwei Arme aufweisender Roboter sein kann.

Das Bereitstellen der Planung der Schaltanlage kann das Beziehen eines entsprechenden Planungsdatensatzes aus einem ECAD-System aufweisen. Der Verdrahtung vorangestellt kann das Verfahren weiterhin einen gegebenenfalls ebenso automatisierten Bestückungsprozess aufweisen, bei dem die Montageplatte mit den zu verdrahtenden elektrischen Komponenten entsprechend der Planung der Schaltanlage, insbesondere entsprechend des ECAD-Datensatzes, bestückt wird.

Das Verfahren kann weiterhin das Ausgeben mindestens einer Verdrahtungsanweisung umfassen, wobei die Verdrahtungsanweisung eine Anweisung zur Durchführung eines manuellen Verdrahtungsschrittes ist, der bei dem Anwenden der Prüfroutine auf die Verdrahtungsinformation als ein Verdrahtungsschritt identifiziert worden ist, der nicht automatisierbar ist. Der manuelle Verdrahtungsschritt kann computergestützt erfolgen, wie es in der EP 3392987 A1 beschrieben ist.

Das automatisierte Verdrahten kann das sequenzielle Herstellen einer Mehrzahl individuell vorkonfektionierter Kabel in der Verdrahtungsreihenfolge, mit der die elektrischen Komponenten verdrahtet werden, und das Bereitstellen der individuell vorkonfektionierten Kabel über eine Übergabeschnittstelle zur Bearbeitung vorkonfektionierter Kabel aufweisen. Das Verfahren kann vorzugsweise das Herstellen und Bereitstellen der vorkonfektionierten Kabel "in time" aufweisen, so dass die Lagerhaltung von Kabelbündeln und anderen Kabelsequenzen sowie das Handling derselben bei dem Hersteller der Bündel sowie gegebenenfalls ein Transport zum Schaltanlagenbauer nicht erforderlich ist.

So kann es beispielsweise vorgesehen sein, dass zeitgleich zu einem ersten Verdrahtungsschritt, bei dem mit einem ersten der individuell vorkonfektionierten Kabel eine erste elektrische Verbindung zwischen zweien der elektrischen Komponenten hergestellt wird, ein zweites individuell vorkonfektioniertes Kabel für einen dem ersten unmittelbar nachfolgenden zweiten Verdrahtungsschritt hergestellt und über die Übergabeschnittstelle bereitgestellt wird.

Die Übergabeschnittstelle kann beispielsweise eine Ausgabe einer Kabelkonfektionierungsvorrichtung sein. Die Übergabeschnittstelle kann jedoch auch ein gesonderter Halter für vorkonfektionierte Kabel sein, in welchen die vorkonfektionierten Kabel der Reihe nach und mit definierter Ausrichtung und Abnahmeposition, etwa für einen Knickarmroboter, nach entsprechender Vorproduzierung bereitgestellt werden.

Das Abnehmen kann das Greifen eines ersten vorkonfektionierten Kabelendes des vorkonfektionierten Kabels mit dem Roboter und das Zuführen sowie das elektrische Kontaktieren des ersten vorkonfektionierten Kabelendes an einer Kabelanschlussstelle einer ersten der elektrischen Komponenten aufweisen. Dazu kann der Roboter einen multifunktionalen Endeffektor mit einem Greifer aufweisen, der beispielsweise eine Aufnahmegeometrie aufweist, die an eine Außengeometrie einer Aderendhülse oder dergleichen des vorkonfektionierten Kabels angepasst ist und im Übrigen eine Einführhilfe aufweist, beispielsweise einen Konus, mit Hilfe welches das Kabelende in eine Buchse der Kabelanschlussstelle der elektrischen Komponente eingeführt wird.

Nach dem Kontaktieren des ersten vorkonfektionierten Kabelendes kann das zweite vorkonfektionierte Kabelende des Kabels einer Kabelanschlussstelle einer zweiten der elektrischen Komponenten zugeführt und an dieser kontaktiert werden.

Das Zuführen und das Kontaktieren des ersten und des zweiten Kabelendes kann mit demselben Roboter durchgeführt werden, wozu der Roboter das vorkonfektionierte Kabel an einem Greifer, mit dem er das erste Kabelende des Kabels gegriffen hat, freigibt oder löst, nachdem das erste Kabelende kontaktiert worden ist, um anschließend das vorkonfektionierte Kabel von dem ersten zu dem zweiten Kabelende durch den Greifer hindurch zu transportieren, um anschließend das zweite vorkonfektionierte Kabelende zu greifen und daraufhin beispielsweise einer weiteren elektrischen Komponente zwecks Kontaktierung zuzuführen.

Das sequentielle Herstellen einer Mehrzahl individuell vorkonfektionierter Kabel in der Verdrahtungsreihenfolge kann das Herstellen der individuell vorkonfektionierten Kabel mit mindestens einem Kabelkonfektionierungsautomat aufweisen. Dabei kann die Mehrzahl individuell vorkonfektionierter Kabel über eine Übergabeschnittstelle an den mindestens einen Roboter, vorzugsweise an den mindestens einen Knickarmroboter, sequentiell übergeben werden.

Das automatisierte Verdrahten kann das Vorkonfektionieren einer Mehrzahl von Kabeln in der Verdrahtungsreihenfolge und entsprechend der Verdrahtungsinformation aufweisen, wozu ein Roboter, vorzugsweise ein Knickarmroboter, ein unkonfektioniertes oder nur teilweise vorkonfektioniertes erstes Kabelende greift, das erste Kabelende einem Kabelkonfektionierungsautomat zuführt, woraufhin das erste Kabelende eine Konfektionierung, vorzugsweise eine Aderendbehandlung erhält, und wobei der Roboter anschließend das konfektionierte erste Kabelende einer ersten der elektrischen Komponenten zuführt und an dieser elektrisch kontaktiert.

Der Roboter kann nach dem Vorkonfektionieren des ersten Kabelendes und vor dem Zuführen und Kontaktieren des ersten Kabelendes das zweite Kabelende greifen und einem Kabelkonfektionierungsautomat zuführen, woraufhin das zweite Kabelende eine Konfektionierung, vorzugsweise eine Aderendbehandlung erhält.

Das Abnehmen eines vorkonfektionierten oder unkonfektionierten Kabels mit einem Roboter kann das Abnehmen eines ersten Kabelendes des Kabels mit einem ersten Roboter und das Abnehmen eines zweiten Kabelendes des Kabels mit einem zweiten Roboter aufweisen, so dass das Kabel an seinen beiden Enden von unterschiedlichen Robotern gehalten wird.

Die beiden Roboter, die wiederum vorzugsweise Knickarmroboter sind, können bis zur Kontaktierung eines der beiden Kabelenden in einem Master-Slave-Modus betrieben werden, wobei der Master-Roboter das vor dem anderen Kabelende zuerst zu verdrahtende Kabelende einer der elektrischen Komponenten zuführt, während der Slave-Roboter das nachfolgend zu verdrahtende Kabelende nachführt. Die beiden Roboter können als ein einziger zweiarmiger Roboter oder als zwei separate Roboter realisiert sein.

Das Nachführen kann das Halten des nachfolgend zu verdrahtenden Kabelendes unter Einhaltung eines Mindestabstands zu der Montageebene der Montageplatte und/oder das Straffen des nachfolgend zu verdrahtenden Kabelendes, wenn das Kabel biegeschlaff ist, und/oder das Halten des nachfolgend zu verdrahtenden Kabelendes unter einer mechanischen Vorspannung aufweisen.

Das automatisierte Verdrahten kann, nachdem ein Kabelende einer elektrischen Komponente zugeführt und mit dieser elektrisch kontaktiert worden ist, das Durchführen einer Abzugskontrolle aufweisen. Dazu kann ein Roboter mit einem zugkraftsensitiven Greifer, der beispielsweise im Funktionsumfang eines multifunktionalen Endeffektors eines Knickarmroboters realisiert ist, an dem kontaktierten Kabelende angreifen und das Kabelende mit einer vorgegebenen Abzugskraft entgegen einer Kontaktierungsrichtung des Kabelendes beaufschlagen, wobei eine ordnungsgemäße Kontaktierung des Kabelendes angenommen wird, wenn die Kontaktierung der vorgegebenen Abzugskraft standhält. Der zugkraftsensitive Greifer kann über einen Flansch an einem Roboterarm befestigt sein, wobei der Flansch einen Kraft-Momenten-Sensor aufweist. Alternativ kann der Roboter in mindestens einem Roboterarmgelenk einen Drehmomentsensor aufweisen.

Die Verdrahtungsinformation kann je Verdrahtung zweier der elektrischen Komponenten mindestens ein Kabelrouting, einschließlich einer Kabelquellkoordinate, einer Kabelzielkoordinate und einem Verlegeweg zwischen der Kabelquellkoordinate und der Kabelzielkoordinate, und mindestens eine Kabelbeschaffenheit, vorzugsweise eine Kabellänge, einen Kabelquerschnitt, eine Kabelfarbe, eine Aderendbehandlung und/oder eine Kabelmarkierung oder dergleichen aufweisen.

Bei dem Bereitstellen einer Planung der Schaltanlage kann weiterhin Komponenteninformation aus der Planung bereitgestellt werden, vorzugsweise mindestens eine Abmessung der Montageplatte, ein Typ mindestens einer der elektrischen Komponenten oder einer weiteren Komponente der elektrischen Schaltanlage, mindestens eine Anschlussart mindestens einer der elektrischen Komponenten, einer Anschlusskoordinate mindestens einer der elektrischen Komponenten, oder eine Geometrie mindestens einer der elektrischen Komponenten.

Weitere Einzelheiten der Erfindung werden anhand der nachstehenden Figuren erläutert. Dabei zeigt:
- Figur 1: schematisch ein Ablaufdiagramm einer Ausführungsform eines erfindungsgemäßen Verfahrens;
- Figur 2: eine erste Ausführungsform einer beispielhafte Vorrichtung zur Durchführung eines erfindungsgemäßen Verfahrens;
- Figur 3: eine zweite Ausführungsform einer beispielhaften Vorrichtung zur Durchführung des erfindungsgemäßen Verfahrens;
- Figur 4: eine dritte Ausführungsform einer beispielhaften Vorrichtung zur Durchführung des erfindungsgemäßen Verfahrens;
- Figur 5: eine vierte Ausführungsform einer beispielhaften Vorrichtung zur Durchführung des erfindungsgemäßen Verfahrens;
- Figur 6: eine fünfte Ausführungsform einer beispielhaften Vorrichtung zur Durchführung des erfindungsgemäßen Verfahrens;
- Figur 7: eine sechste Ausführungsform einer beispielhaften Vorrichtung zur Durchführung des erfindungsgemäßen Verfahrens;
- Figur 8: eine siebte Ausführungsform einer beispielhaften Vorrichtung zur Durchführung des erfindungsgemäßen Verfahrens;
- Figur 9: eine achte Ausführungsform einer beispielhaften Vorrichtung zur Durchführung des erfindungsgemäßen Verfahrens; und
- Figur 10: eine neunte Ausführungsform einer beispielhaften Vorrichtung zur Durchführung des erfindungsgemäßen Verfahrens.

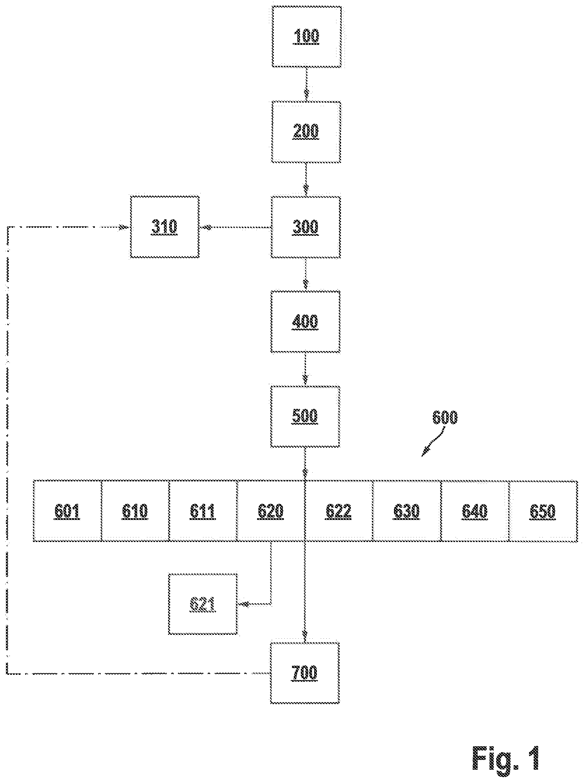

Bei dem erfindungsgemäßen Verfahren gemäß Figur 1 wird in einem ersten Schritt 100 eine Planung einer Schaltanlage bereitgestellt, die zumindest Ortsinformation und Orientierungsinformation über eine Mehrzahl elektrischer Komponenten der Schaltanlage auf einer Montageplatte und Verdrahtungsinformationen über eine Mehrzahl elektrischer Verdrahtungen zwischen jeweils zweien der elektrischen Komponenten aufweist.

In einem nachfolgenden Schritt 200 wird eine Prüfroutine auf die Verdrahtungsinformation angewendet, um etwa unter Berücksichtigung des Funktionsumfangs einer zur Verfügung stehenden Vorrichtung zur Durchführung des Verdrahtungsverfahrens einen maximal realisierbaren Automatisierungsgrad der Verdrahtung zu bestimmen. Daraufhin kann die Verdrahtungsinformation gegebenenfalls angepasst werden, um beispielsweise unter Berücksichtigung der zur Verfügung stehenden Vorrichtung für die Durchführung des Verdrahtungsverfahrens eine Maximierung des Automatisierungsgrads zu erreichen. Das Anpassen der Verdrahtungsinformation ist in dem Schritt 300 beschrieben. Nicht automatisierbare Verdrahtungsschritte können für die manuelle Verdrahtung 310 ausgesondert werden, so dass sie bei der automatisierten Verdrahtung unberücksichtigt bleiben. Der manuelle Verdrahtungsschritt 310 kann computergestützt erfolgen, wie es in der EP 3392987 A1 beschrieben ist. Das manuelle Verdrahten 310 kann nach dem Durchführen einer Abzugskontrolle 700 durchgeführt werden, bzw. nachdem die Verdrahtung, soweit sie automatisierbar ist, vollständig abgeschlossen ist.

Das Verfahren weist weiterhin das optische Erfassen 400 einer tatsächlichen Anordnung der elektrischen Komponenten auf einer für die Verdrahtung bereitgestellten Montageplatte mit einer an dem Roboter 8 oder einer über der Montageplatte 1 montierten Kamera 13 und das Angleichen 500 der Ortsinformation und Orientierungsinformation an die tatsächliche Anordnung auf.

Das optische Erfassen 400 kann das Abscannen der Montageebene der Montageplatte mit einem Laser-Profilmesssystem und/oder die Anwendung gängiger Bilderkennungsverfahren umfassen. Das Verfahren kann weiterhin das Erzeugen mindestens eines Codes bzw. mindestens einer Roboter- oder Maschinensteuerung zur Ausführung der Verdrahtung aufweisen.

Daran anschließend kann in einem Schritt 600 das automatische Verdrahten der elektrischen Komponenten in einer vorgegebenen Verdrahtungsreihenfolge und unter Berücksichtigung der - gegebenenfalls angepassten - Verdrahtungsinformation und der angeglichenen Ortsinformation und Orientierungsinformation durchgeführt werden. Das Verdrahten 600 kann das Abnehmen 610 eines zumindest teilweise vorkonfektionierten oder eines unkonfektionierten Kabels mit einem Roboter von einer Übergabeschnittstelle aufweisen. Das Verdrahten 600 kann alternativ oder zusätzlich das sequentielle Herstellen 620 einer Mehrzahl individuell vorkonfektionierter Kabel in der Verdrahtungsreihenfolge aufweisen, gegebenenfalls "in-time" mit dem Verdrahten 600, so dass an der Übergabeschnittstelle immer gerade das als nächstes zu verdrahtende Kabel für die Abnahme bereitgestellt ist.

Das automatisierte Verdrahten 600 kann das Abnehmen 610 eines zumindest teilweise vorkonfektionierten oder eines unkonfektionierten Kabels mit einem Roboter, vorzugsweise mit einem Knickarmroboter, von einer Übergabeschnittstelle für die Übergabe der zumindest teilweise vorkonfektionierten oder unkonfektionierten Kabel aufweisen.

Das Abnehmen 610 eines zumindest teilweise vorkonfektionierten Kabels kann das Abnehmen eines auf eine bestimmte Länge abgelängten Kabels von der Übergabeschnittstelle eines Kabelablängautomaten aufweisen.

Nach dem Abnehmen 610 des Kabels von der Übergabeschnittstelle kann das Verfahren weiterhin das Konfektionieren 611 mindestens eines zumindest teilweise vorkonfektionierten oder eines unkonfektionierten Endes des Kabels aufweisen, wozu das Kabelende mit dem Roboter einem Kabelendbearbeitungsautomaten zugeführt und von diesem nach erfolgter Kabelendbehandlung wieder entnommen wird.

Das Abnehmen 610 kann das Greifen 630 eines ersten vorkonfektionierten Kabelendes des vorkonfektionierten Kabels und das Zuführen 640 sowie das elektrische Kontaktieren 650 des ersten vorkonfektionierten Kabelendes an einer Kabelanschlussstelle einer ersten elektrischen Komponente aufweisen.

Das Verfahren kann weiterhin das sequentielle Übergeben 622 einer Mehrzahl individuell vorkonfektionierter Kabel über eine Übergabeschnittstelle an mindestens einen Roboter aufweisen, der vorzugsweise als ein Knickarmroboter ausgebildet ist.

Ebenso kann das automatisierte Verdrahten 600 das Vorkonfektionieren 601 einer Mehrzahl von Kabeln in der Verdrahtungsreihenfolge sowie unter Berücksichtigung von Verdrahtungsinformation aufweisen. Die Verdrahtungsinformation kann beispielsweise je Verdrahtung zweier elektrischer Komponenten mindestens ein Kabelrouting und mindestens eine Kabelbeschaffenheit, vorzugsweise eine Kabellänge, einen Kabelquerschnitt, eine Kabelfarbe, eine Aderendbehandlung und/oder eine Kabelmarkierung aufweisen.

Nachdem ein Kabelende einer elektrischen Komponente zugeführt und mit dieser elektrisch kontaktiert worden ist, kann das Verfahren das Durchführen einer Abzugskontrolle 700 aufweisen, wozu ein Roboter beispielsweise mit einem zugkraftsensitiven Greifer an dem kontaktierten Kabelende angreift und das Kabelende mit einer vorgegebenen Abzugskraft entgegen einer Kontaktierungsrichtung des Kabelendes beaufschlagt. Eine ordnungsgemäße Kontaktierung des Kabelendes kann angenommen werden, wenn die Kontaktierung der vorgegebenen Abzugskraft standhält und insbesondere eine Dekontaktierung des Kabelendes unterbleibt. Das Verfahren kann in dem Schritt 700 oder in einem separaten Schritt neben der Abzugskontrolle weiterhin eine elektrische Prüfung einer der erzeugten Drahtverbindungen aufweisen. Dies kann die Ermittlung eines elektrischen Kontaktwiderstands aufweisen.

Das Abnehmen 610 eines vorkonfektionierten oder unkonfektionierten Kabels mit einem Roboter kann das Abnehmen 610 eines ersten Kabelendes des Kabels mit einem ersten Roboter und das Abnehmen 610 eines zweiten Kabelendes des Kabels mit einem zweiten Roboter aufweisen. Mithin wird das Kabel an seinen beiden Enden von unterschiedlichen Robotern gehalten. Bei dieser Ausführungsform können die beiden Roboter bis zur Kontaktierung eines der beiden Kabelenden in einem Master-Slave-Modus betrieben werden, im Rahmen welches der Master-Roboter das vor dem anderen Kabelende zuerst zu verdrahtende Kabelende einer der elektrischen Komponenten zuführt während der Slave-Roboter das nachfolgend zu verdrahtende Kabel in dem zeitgleich ausgeführten Schritt 621 nachführt.

Das Nachführen 621 kann das Halten des nachfolgend zu verdrahtenden Kabelendes unter Einhaltung eines Mindestabstandes zu einer Montageebene der Montageplatte und/oder das Straffen des nachfolgend zu verdrahtenden Kabelendes, wenn das Kabel biegeschlaff ist, aufweisen und/oder das Halten des nachfolgend zu verdrahtenden Kabelende unter einer mechanischen Vorspannung.

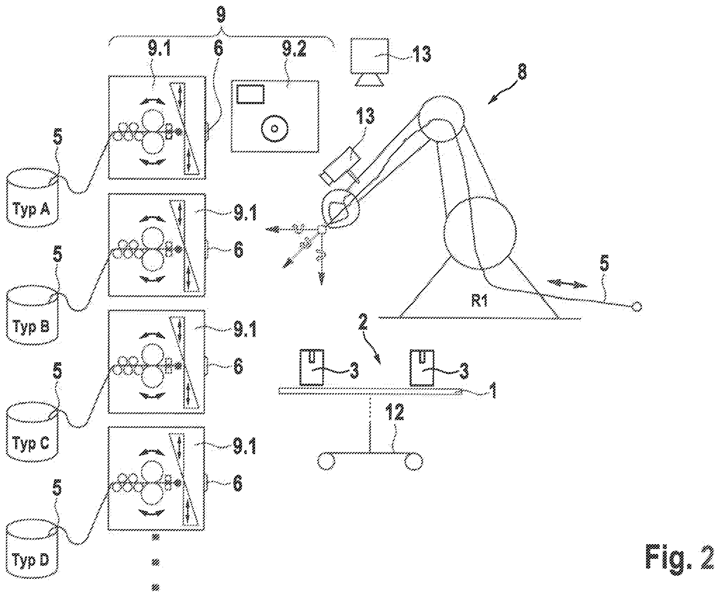

Die Figuren 2 bis 10 zeigen beispielhafte Ausführungsformen für Vorrichtungen zur Durchführung des erfindungsgemäßen Verfahrens zur Verdrahtung von elektrischen Komponenten 3 einer auf einer Montageplatte 1 auszubildenden elektrischen Schaltanlage 2. Die Montageplatte 1 ist von einem Montageplattenhandlingwagen 12 beispielhaft horizontal ausgerichtet gehalten, so dass über einen Roboter 8 von oben auf die Komponenten 3 zwecks Kabelzuführung und Kabelanschluss zugegriffen werden kann. Die Montageplatte 1 kann je nach Ausführungsform alternativ unter einem Winkel zur Horizontalen angeordnet sein.

Die beispielhaft beschriebenen Vorrichtungen zur Durchführung des erfindungsgemäßen Verfahrens können mit einem ECAD-System in Verbindung stehen, über welches eine Planung der Schaltanlage bereitgestellt wird, die Prüfroutine auf die Verdrahtungsinformation angewendet und daraufhin die Verdrahtungsinformation zur Maximierung des Automatisierungsgrades angepasst wird. Die Anwendung der Prüfroutine auf die Verdrahtungsinformation sowie die Anpassung der Verdrahtungsinformation zur Maximierung des Automatisierungsgrades können auch unabhängig von dem ECAD-System auf einem gesonderten Computersystem durchgeführt werden, dass eine Schnittstelle sowohl zu dem ECAD-System als auch zu der Vorrichtung für die Verdrahtung der elektrischen Komponenten aufweist. Das Computersystem kann von dem ECAD-System dann die Planung der Schaltanlage beziehen, die Prüfroutine auf die Verdrahtungsinformation anwenden und gegebenenfalls eine Anpassung der Verdrahtungsinformation vornehmen.

Die Vorrichtung für die Durchführung des Verdrahtungsvorgangs kann einen multifunktionalen Endeffektor mit einer optischen Erfassungseinrichtung aufweisen für die optische Erfassung der tatsächlichen Anordnung der elektrischen Komponenten auf der Montageplatte. Nachdem die tatsächliche Anordnung der elektrischen Komponenten mit Hilfe der optischen Erfassungseinrichtung des multifunktionalen Endeffektors erfasst worden ist, wird diese Information dazu verwendet, um gegebenenfalls einer Angleichung der Ortsinformation und Orientierungsinformation an die tatsächliche Anordnung mit Hilfe des Computersystems durchzuführen. Das Computersystem sendet daraufhin eine entsprechend angepasste Planung der Schaltanlage beziehungsweise ein daraus erzeugtes Maschinensteuerungsprogramm an die Vorrichtung zur Verdrahtung der elektrischen Komponenten, so dass die Vorrichtung das automatisierte Verdrahten der elektrischen Komponenten in einer vorgegebenen Verdrahtungsreihenfolge, die gegebenenfalls von dem Computersystem im Rahmen der Anpassung der Verdrahtungsinformation zur Maximierung des Automatisierungsgrads überarbeitet worden ist, durchführen kann.

Bei der in Figur 2 gezeigten Ausführungsform der Vorrichtung werden mit einer Mehrzahl Kabelablängautomaten 9.1 jeweils Kabel eines bestimmten Typs A-D und jeweils einer bestimmten Länge bereitgestellt. Die Kabeltypen A-D können sich etwa im Kabelquerschnitt, in der Kabelfarbe, oder in einem anderen Kabelmerkmal unterscheiden. Grundsätzliche ist die Erfindung nicht auf eine bestimmte Anzahl Kabeltypen beschränkt. Es sollen vorzugsweise jedoch mindestens zwei sich in mindestens einem Kabelmerkmal unterscheidende Kabeltypen vorgesehen sein. Sämtliche Kabelmerkmale, einschließlich der Kabellänge, können der Planung der Schaltanlage, etwa in Form einer von dem ECAD-System bereitgestellten Planungsdatei entnommen werden.

Der Ein-Arm-Knickarmroboter 8 nimmt unmittelbar von einer Schnittstelle 6 des das Kabel 5 des gewünschten Typs bereitstellenden Kabelablängautomats 9 ab, um das abgelängte Kabel 5 für die Aderendbehandlung bestimmungsgemäßer Art dem Aderendbehandlungsautomat 9.2 nacheinander mit beiden Enden 7 für die jeweils erforderliche Nachbehandlung zuzuführen. Das Nachbehandeln kann insbesondere das Abisolieren, das Aufbringen einer Aderendhülse und das Crimpen der Aderendhülse aufweisen.

Nach der Aderendbehandlung kann der Ein-Arm-Knickarmroboter 8 das so erhaltene, vorkonfektionierte Kabel 5 auf der Montageplatte 1 entsprechend der Planung der Schaltanlage 2 in der in Bezug auf Figur 1 beschriebenen Weise verarbeiten, insbesondere entsprechend einer Planung der Schaltanlage 2 Komponenten 3 der Schaltanlage 2 verdrahten.

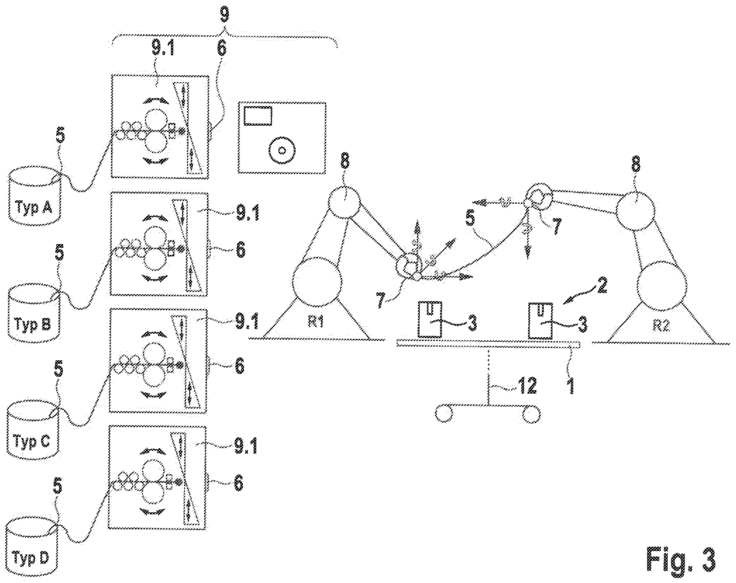

Die in Figur 3 gezeigte Ausführungsform unterscheidet sich von der in Figur 2 gezeigten Ausführungsform darin, dass anstelle eines einarmigen Knickarmroboters 8 ein zweiarmiger Knickarmroboter 8 verwendet wird. Der zweiarmiger Knickarmroboter 8 kann, wie dargestellt, als zwei separate Roboter realisiert oder ein einziger, zwei Arme aufweisender Roboter sein. Soweit in der vorliegenden Anmeldung einem ersten und einem zweiten Roboter, insbesondere von einem ersten und zweiten Knickarmroboter 8 gesprochen wird, kann dies auch durch den in Figur 3 gezeigten zweiarmigen Knickarmroboter 8 realisiert sein. Die beiden Arme des/der Knickarmroboter(s) 8 können kooperativ zusammenarbeiten wie dies mit Bezug auf Figur 1 beschrieben ist. Insbesondere indem die beiden Roboterarme in einem Master-Slave-Modus betrieben werden, bei dem ein Master-Roboterarm 8 für die Verdrahtung eines ersten Kabelendes 7 vorgesehen ist, während der Slave-Roboterarm 8 für eine Nachführung des gegenüberliegenden Kabelendes 7 vorgesehen ist, etwa derart, dass ein bestimmter Mindestabstand des gegenüberliegenden Kabelendes 7 von der Montageplatte 1 eingehalten wird, um ein Verheddern des Kabels 5 mit auf der Montageplatte 1 angeordneten elektrischen Komponenten 3 zu vermeiden, oder um das Einlegen des Kabels 5 in einen Kabelkanal während der von den Robotern durchgeführten Kabelführung zwischen den beiden miteinander elektrisch zu kontaktierenden Komponenten 3 zu begünstigen.

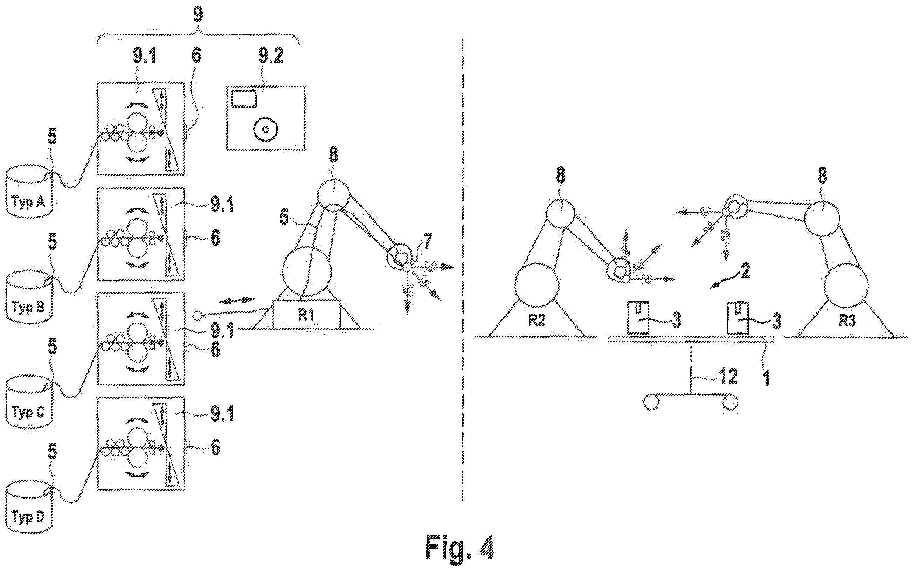

Die in Figur 4 gezeigte Ausführungsform unterscheidet sich von der in Figur 3 gezeigten Ausführungsform darin, dass ein weiterer Knickarmroboter 8 dazu vorgesehen ist, um mithilfe der Kabelkonfektionierungsautomaten 9.1, 9.2 in der zuvor beschriebenen Weise in-time vorkonfektionierte Kabel zu erzeugen und an den zweiarmigen Knickarmroboter 8 zu übergeben.

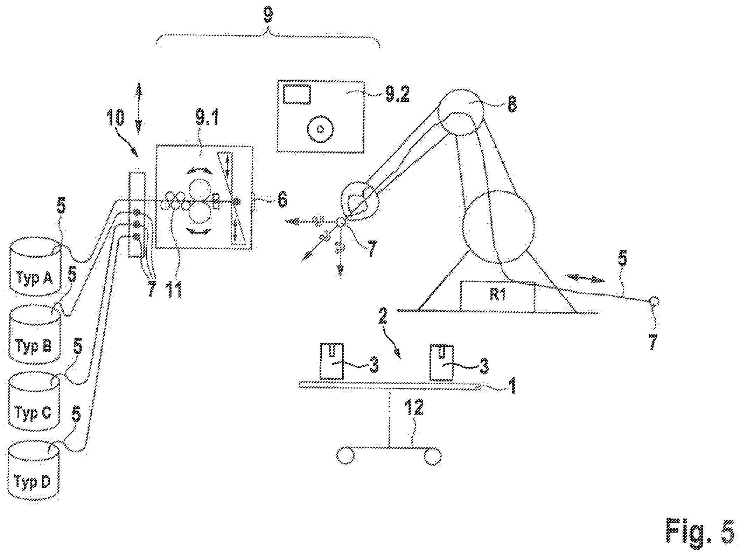

Die in Figur 5 gezeigte Ausführungsform zeigt die Verwendung eines Drahtwechslers 10, mit Hilfe welches einem einzigen Kabelablängautomaten 9.1 verschiedenartige Kabel der Typen A-D, die aus unterschiedlichen Quellen, etwa aus den dargestellten Kabelfässern, bezogen werden, bedarfsweise zugeführt sind. Ein Transportsystem 11 des Kabelablängautomats 9.1 entnimmt ein jeweils bedarfsweise an dem Drahtwechsler 10 bereitgestelltes Drahtende von dem Drahtwechsler 10. Der Drahtwechsler 10 ist in Bezug auf das Transportsystem 11 zwischen seinen unterschiedlichen Abnahmestellen beweglich ist (durch den vertikalen Doppelpfeil verdeutlicht), so dass bedarfsweise ein gewünschter Drahttyp A-D dem Kabelablängautomaten 9.1 zugeführt werden kann.

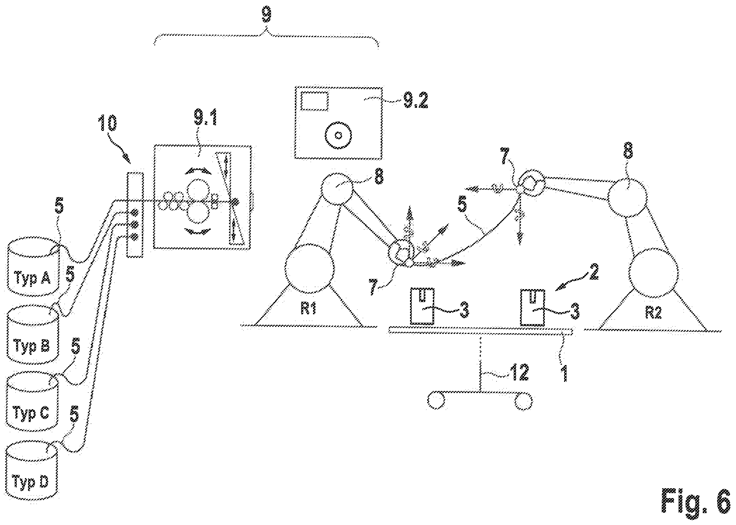

Die Ausführungsform gemäß Figur 6 zeigt eine Variante der Ausführungsform gemäß Figur 5, bei der anstelle eines einarmigen Knickarmroboters 8 ein zweiarmiger Knickarmroboter 8 bzw. zwei einarmige Roboter 8 verwendet wird/werden. Die Führung der Kabelenden kann unter den Maßgaben erfolgen, wie sie mit Bezug auf die Figur 3 beschrieben worden sind.

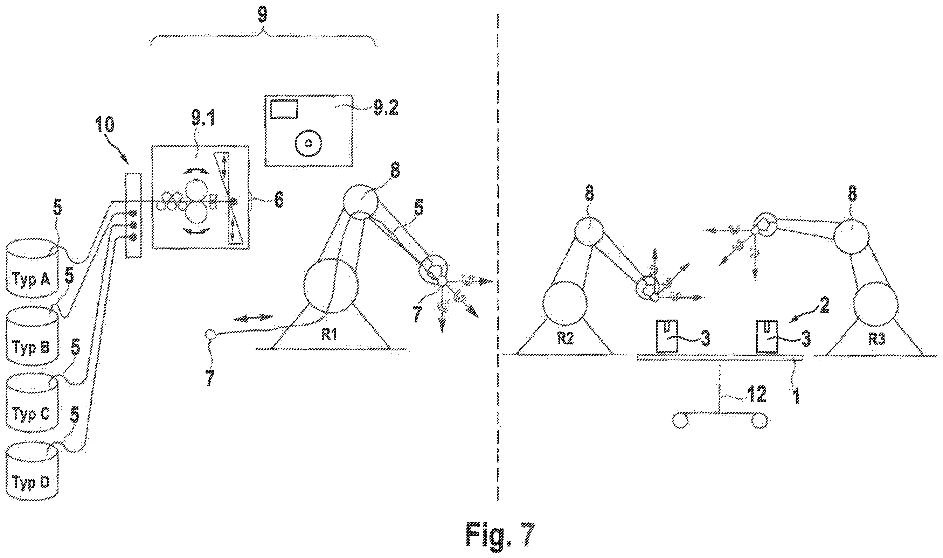

Die Figur 7 zeigt eine Variante der Ausführungsform gemäß Figur 6, bei der zur Abnahme der abgelängten Kabel 5 von dem Kabelablängautomaten 9.1 und zur Aderendbehandlung der abgelängten Kabel 5 mithilfe des Aderendbehandlungsautomaten 9.2 ein separater einarmiger Knickarmroboter 8 vorgesehen ist. Dieser gibt die aderendbehandelten Kabel 5 an zwei weitere für die Verdrahtung kollaborierende einarmige Knickarmroboter 8 weiter. Der kollaborierende Verdrahtungsprozess ist mit Bezug auf Figur 3 beschrieben worden.

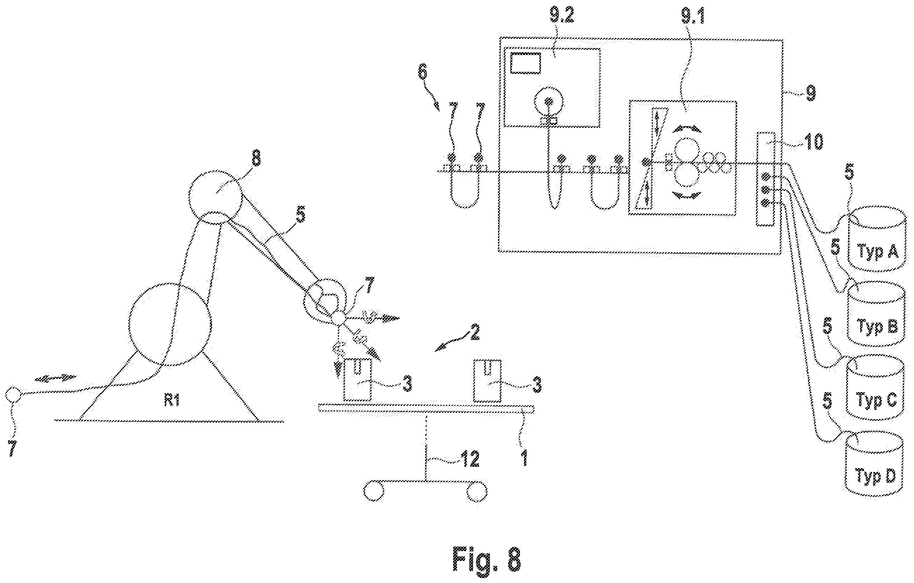

Die Figur 8 zeigt eine weitere Ausführungsform einer erfindungsgemäßen Vorrichtung, bei der ein einarmiger Knickarmroboter 8 über eine Kabelkonfektionierungsanlage 9 bereitgestellte vorkonfektionierte Kabel 5 bezieht. Die Kabelkonfektionierungsanlage 9 weist einen Kabelablängautomaten 9.1 auf, dem über einen Drahtwechsler 10 wahlweise Kabel 5 des Typs A-D zugeführt ist. Das abgelängte Kabelstück 5 wird einem Aderendbehandlungsautomaten 9.2 zugeführt, der eine Ausgabe aufweise, über welche die fertig vorkonfektionierten Kabel 5 einzeln, das heißt sequentiell in einer vorgegebenen Verlegereihenfolge ausgegeben werden. Die vorkonfektionierten Kabel 5 sind biegeschlaff und werden von der Kabelkonfektionierungsanlage 9 an einer Schnittstelle 6 in einer U-förmigen Geometrie bereitgestellt. Die Kabel 5 sind an ihren Enden 7 gehaltert, so dass der Knickarmroboter 8 das konfektionierte Kabels 5 bei definierter Anordnung der Kabelenden 7 über die Kabelenden 7 von der Kabelkonfektionierungsanlage 9 abnehmen kann.

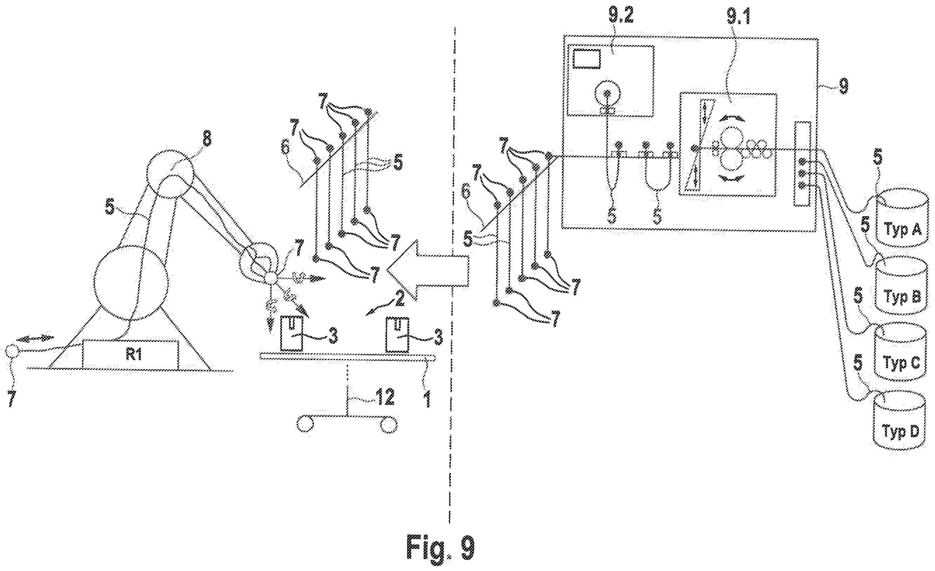

Die in Figur 9 gezeigte Ausführungsform unterscheidet sich von der in Figur 8 gezeigten Ausführungsform darin, dass die Kabelkonfektionierungsanlage 9 separat von der Vorrichtung für die Durchführung des Verfahrens bereitgestellt ist. Mithin produziert die Kabelkonfektionierungsanlage 9 eine als Magazin ausgebildete Übergabeschnittstelle 6 mit mehreren vorkonfektionierten Kabeln 5, die in der Übergabeschnittstelle 6 in einer vorbestimmten Verdrahtungsreihenfolge zueinander und mit vorgegebener Ausrichtung angeordnet sind, so dass der Knickarmroboter 8 die Einzeldrähte 5 aus dem Magazin definiert entnehmen kann, wozu das Magazin in einer vorbestimmten Anordnung und Ausrichtung in Bezug auf den Knickarmroboter 8 ausgerichtet wird. Der Knickarmroboter 8 kann weiterhin eine Erkennungseinrichtung, beispielsweise eine optische Erkennungseinrichtung aufweisen, um die Einzelkabel 5 in dem Magazin zu unterscheiden.

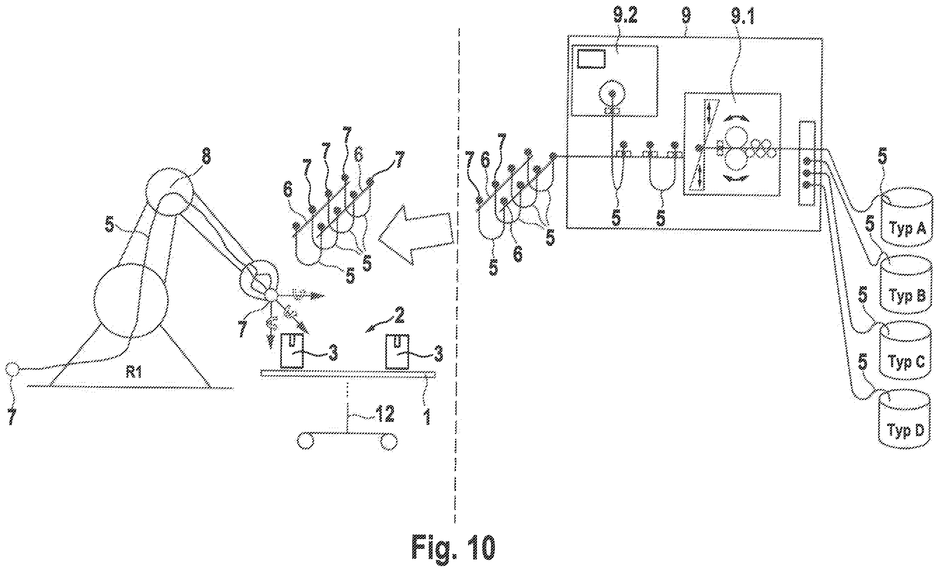

Abweichend von der in Figur 9 gezeigten Ausführungsform weist die in Figur 10 gezeigte Ausführungsform eine Kabelkonfektionierungsanlage 9 auf, bei der das Kabel 5 an seinen beiden gegenüberliegenden Enden 7 in der als Magazin ausgebildeten Übergabeschnittstelle 6 gehalten und damit definiert angeordnet ist, wodurch die Abnahme der Kabel 5 mithilfe des Knickarmroboters 8 erleichtert wird.

### Bezugszeichenliste

- 1: Montageplatte
- 2: Schaltanlage
- 3: Elektrische Komponente
- 4: Elektrische Verdrahtung
- 5: Kabel
- 6: Übergabeschnittstelle
- 7: Kabelende
- 8: Roboter
- 9: Kabelkonfektionierungsautomat
- 9.1: Kabelablängautomat
- 9.2: Aderendbehandlungsautomat
- 10: Drahtwechsler
- 11: Transportsystem
- 12: Montageplattenhandlingwagen
- 13: Kamera
- 100: Bereitstellen
- 200: Anwenden
- 300: Anpassen
- 310: manuelles Verdrahten
- 400: Optisches Erfassen
- 500: Angleichen
- 600: Automatisiertes Verdrahten
- 601: Vorkonfektionieren
- 610: Abnehmen
- 611: Konfektionieren
- 620: Herstellen
- 621: Nachführen
- 622: Sequentielles Übergeben
- 630: Greifen
- 640: Zuführen
- 650: Kontaktieren
- 700: Durchführen einer Abzugskontrolle und/oder elektrischen Prüfung

## Patentansprüche

1. Verfahren zur Verdrahtung von elektrischen Komponenten (3) einer auf einer Montageplatte (1) angeordneten elektrischen Schaltanlage (2), das die Schritte aufweist:
- Bereitstellen (100) einer Planung einer Schaltanlage (2), die zumindest Ortsinformation und Orientierungsinformation über eine Mehrzahl elektrischer Komponenten (3) der Schaltanlage auf einer Montageplatte (1) und Verdrahtungsinformation über eine Mehrzahl elektrischer Verdrahtungen (4) zwischen jeweils zweien der elektrischen Komponenten (3) aufweist;
- optisches Erfassen (400) einer tatsächliche Anordnung der elektrischen Komponenten (3) auf der Montageplatte (1) und Angleichen (500) der Ortsinformation und Orientierungsinformation an die tatsächliche Anordnung; und
- automatisiertes Verdrahten (600) der elektrischen Komponenten (3) in einer Verdrahtungsreihenfolge und entsprechend der Verdrahtungsinformation und der angeglichenen Ortsinformation und Orientierungsinformation,
**dadurch gekennzeichnet, dass** das optische Erfassen (400) eine Präsenzprüfung der Mehrzahl elektrischer Komponenten (3) der Schaltanlage aufweist, indem das optische Erfassen (400) eine Komponentenerkennung der tatsächlichen Anordnung der elektrischen Komponenten (3) und einen Abgleich der erkannten Komponenten (3) mit der Mehrzahl elektrischer Komponenten (3) der Schaltanlage gemäß der Planung aufweist,
und wobei das Verfahren weiterhin das Anwenden (200) einer Prüfroutine auf die Verdrahtungsinformation zur Bestimmung eines Automatisierungsgrades der Verdrahtungen (4) und gegebenenfalls das Anpassen (300) der Verdrahtungsinformation zur Maximierung des Automatisierungsgrads aufweist, wobei das automatisierte Verdrahten (600) der elektrischen Komponenten (3) entsprechend der angepassten Verdrahtungsinformation erfolgt.

2. Verfahren nach Anspruch 1, bei dem das automatisierte Verdrahten (600) das Abnehmen (610) eines zumindest teilweise vorkonfektionierten oder eines unkonfektionierten Kabels (5) mit einem Roboter (8), vorzugsweise mit einem Knickarmroboter, von einer Übergabeschnittstelle (6) für die Übergabe der zumindest teilweise vorkonfektionierten oder unkonfektionierten Kabel (5) aufweist.

3. Verfahren nach Anspruch 2, bei dem das Abnehmen (610) eines zumindest teilweise vorkonfektionierten Kabels (5) das Abnehmen eines auf eine bestimmte Länge abgelängten Kabels (5) von der Übergabeschnittstelle (6) eines Kabelablängautomaten (9.1) aufweist.

4. Verfahren nach Anspruch 2 oder 3, bei dem nach dem Abnehmen (610) des Kabels (5) von der Übergabeschnittstelle (6) das Verfahren weiterhin das Konfektionieren (611) mindestens eines zumindest teilweise vorkonfektionierten oder eines unkonfektionierten Endes (7) des Kabels (5) aufweist, wozu das Kabelende (7) mit dem Roboter (8) einem Kabelendbearbeitungsautomaten (9.2) zugeführt und von diesem nach erfolgter Kabelendbehandlung wieder entnommen wird.

5. Verfahren nach einem der vorangegangenen Ansprüche, bei dem das automatisierte Verdrahten (600) das sequenzielle Herstellen (620) einer Mehrzahl individuell vorkonfektionierter Kabel in der Verdrahtungsreihenfolge, mit der die elektrischen Komponenten (3) verdrahtet werden, und das Bereitstellen (100) der individuell vorkonfektionierten Kabel (5) über eine Übergabeschnittstelle (6) zur Bereitstellung vorkonfektionierter Kabel (5) aufweist.

6. Verfahren nach Anspruch 5, bei dem zeitgleich zu einem ersten Verdrahtungsschritt, bei dem mit einem ersten der individuell vorkonfektionierten Kabel eine erste elektrische Verbindung zwischen zweien der elektrischen Komponenten (3) hergestellt wird, ein zweites individuell vorkonfektioniertes Kabel (5) für einen dem ersten unmittelbar nachfolgenden zweiten Verdrahtungsschritt hergestellt und über die Übergabeschnittstelle (6) bereitgestellt wird.

7. Verfahren nach einem der Ansprüche 2 bis 4, bei dem das Abnehmen (610) das Greifen (630) eines ersten vorkonfektionierten Kabelendes (7) des vorkonfektionierten Kabels (5) mit dem Roboter (8) und das Zuführen (640) sowie das elektrische Kontaktieren (650) des ersten vorkonfektionierten Kabelendes (7) an einer Kabelanschlussstelle einer ersten der elektrischen Komponenten (3) aufweist.

8. Verfahren nach Anspruch 7, bei dem nach dem Kontaktieren (650) des ersten vorkonfektionierten Kabelendes (7) das zweite vorkonfektioniertes Kabelende (7) des Kabels (5) einer Kabelanschlussstelle einer zweiten der elektrischen Komponenten (3) zugeführt und an dieser kontaktiert wird.

9. Verfahren nach Anspruch 7, bei dem das Zuführen (640) und Kontaktieren (650) des ersten und des zweiten Kabelendes (7) mit demselben Roboter (8) durchgeführt wird, wozu der Roboter (8) das vorkonfektionierte Kabel (5) an einem Greifer, mit dem er das erste Kabelende des Kabels (5) gegriffen hat, freigibt oder löst, nachdem das erste Kabelende (7) kontaktiert worden ist, um anschließend das vorkonfektionierte Kabel (5) von dem ersten zu dem zweiten Kabelende (7) durch den Greifer hindurch zu transportieren, um anschließend das zweite vorkonfektionierte Kabelende zu greifen (630).

10. Verfahren nach Anspruch 5, bei dem das sequenzielle Herstellen (620) einer Mehrzahl individuell vorkonfektionierter Kabel (5) in der Verdrahtungsreihenfolge das Herstellen (620) der individuell vorkonfektionierten Kabel (5) mit mindestens einem Kabelkonfektionierungsautomat (9) aufweist, wobei das Verfahren weiterhin das sequenzielle Übergeben (622) der Mehrzahl individuell vorkonfektionierten Kabel über eine Übergabeschnittstelle (6) an den mindestens einen Roboter (8), vorzugsweise an den mindestens einen Knickarmroboter, aufweist.

11. Verfahren nach Anspruch 1, bei dem das automatisierte Verdrahten (600) das Vorkonfektionieren (601) einer Mehrzahl von Kabeln (5) in der Verdrahtungsreihenfolge und entsprechend der Verdrahtungsinformation aufweist, wozu ein Roboter (8), vorzugsweise ein Knickarmroboter, ein unkonfektioniertes oder nur teilweise vorkonfektioniertes erstes Kabelende (7) greift, das erste Kabelende einem Kabelkonfektionierungsautomat (9) zuführt, woraufhin das erste Kabelende (7) eine Konfektionierung, vorzugsweise eine Aderendbehandlung erhält, und wobei der Roboter (8) anschließend das konfektionierte erste Kabelende (7) einer ersten der elektrischen Komponenten (3) zuführt und an dieser kontaktiert.

12. Verfahren nach Anspruch 10, bei dem der Roboter (8) nach dem Vorkonfektionieren (601) des ersten Kabelendes (7) und vor dem Zuführen (640) und Kontaktieren (650) des ersten Kabelendes (7) das zweite Kabelende (7) greift und einem Kabelkonfektionierungsautomat (9) zuführt, woraufhin das zweite Kabelende (7) eine Konfektionierung, vorzugsweise eine Aderendbehandlung erhält.

13. Verfahren nach einem der Ansprüche 3 bis 13, bei dem das Abnehmen (610) eines vorkonfektionierten oder eines unkonfektionierten Kabels (5) mit einem Roboter (8) das Abnehmen (610) eines ersten Kabelendes (7) des Kabels (5) mit einem ersten Roboter (8) und das Abnehmen (610) eines zweiten Kabelendes (7) des Kabels (5) mit einem zweiten Roboter (8) aufweist, sodass das Kabel (5) an seinen beiden Enden von unterschiedlichen Robotern (8) gehalten wird.

14. Verfahren nach Anspruch 13, bei dem die beiden Roboter (8) bis zur Kontaktierung eines der beiden Kabelenden in einem Master-Slave-Modus betrieben werden, von denen der Master-Roboter (8) das vor dem anderen Kabelende (7) zuerst zu verdrahtende Kabelende (7) einer der elektrischen Komponenten (3) zuführt, während der Slave-Roboter (8) das nachfolgend zu verdrahtende Kabelende (7) nachführt (611).

15. Verfahren nach Anspruch 14, bei dem das Nachführen (621) das Halten des nachfolgend zu verdrahtenden Kabelendes (7) unter Einhaltung eines Mindestabstands zu einer Montageebene der Montageplatte (1) und/oder das Straffen des nachfolgend zu verdrahtenden Kabelendes (7), wenn das Kabel biegeschlaff ist, und/oder das Halten des nachfolgend zu verdrahtenden Kabelendes (7) unter einer mechanischen Vorspannung aufweist.

16. Verfahren nach einem der vorangegangenen Ansprüche, bei dem das automatisierte Verdrahten (600), nachdem ein Kabelende (7) einer elektrischen Komponente (3) zugeführt und mit dieser elektrisch kontaktiert worden ist, das Durchführen einer Abzugskontrolle (700) aufweist, wozu ein Roboter (8) mit einem zugkraftsensitiven Greifer an dem kontaktierten Kabelende (7) angreift und das Kabelende (7) mit einer vorgegebenen Abzugskraft entgegen einer Kontaktierungsrichtung des Kabelendes (7) beaufschlagt, wobei eine ordnungsgemäße Kontaktierung des Kabelendes (7) angenommen wird, wenn die Kontaktierung der vorgegebenen Abzugskraft standhält.

17. Verfahren nach einem der vorangegangenen Ansprüche, bei dem die Verdrahtungsinformation je Verdrahtung zweier der elektrischen Komponenten (3) mindestens ein Kabelrouting, einschließlich einer Kabelquellkoordinate, einer Kabelzielkoordinate und einem Verlegeweg zwischen der Kabelquellkoordinate und der Kabelzielkoordinate, und mindestens eine Kabelbeschaffenheit, vorzugsweise eine Kabellänge, einen Kabelquerschnitt, eine Kabelfarbe, eine Aderendbehandlung und/oder eine Kabelmarkierung aufweist.

18. Verfahren nach einem der vorangegangenen Ansprüche, bei dem bei dem Bereitstellen (100) einer Planung der Schaltanlage (2) weiterhin Komponenteninformation aus der Planung bereitgestellt wird, vorzugsweise mindestens eine Abmessung und/oder Kontur der Montageplatte (1), ein Typ mindestens einer der elektrischen Komponenten (3) oder einer weiteren Komponente der elektrischen Schaltanlage (2), eine Anschlussart mindestens einer der elektrischen Komponenten (3), einer Anschlusskoordinate mindestens einer der elektrischen Komponenten (3), oder eine Geometrie mindestens einer der elektrischen Komponenten (3).

## Claims

1. A method for wiring electrical components (3) of an electrical switchgear (2) arranged on a mounting plate (1), comprising the steps of:
- providing (100) a planning of a switchgear (2) comprising at least location information and orientation information about a plurality of electrical components (3) of the switchgear on a mounting plate (1) and wiring information about a plurality of electrical wirings (4) between each two of the electrical components (3);
- optically detecting (400) an actual arrangement of the electrical components (3) on the mounting plate (1) and matching (500) the location information and orientation information to the actual arrangement; and
- automated wiring (600) of the electrical components (3) in a wiring order and according to the wiring information and the matched location information and orientation information,
**characterised in that** the optical detection (400) comprises a presence check of the plurality of electrical components (3) of the switchgear, **in that** the optical detection (400) comprises a component detection of the actual arrangement of the electrical components (3) and a matching of the detected components (3) with the plurality of electrical components (3) of the switchgear according to the planning,
and wherein the method further comprises applying (200) a test routine to the wiring information for determining a degree of automation of the wirings (4) and optionally adapting (300) the wiring information for maximising the degree of automation, wherein the automated wiring (600) of the electrical components (3) is carried out according to the adapted wiring information.

2. The method according to claim 1, wherein the automated wiring (600) comprises removing (610) an at least partially prefabricated or an unfabricated cable (5) with a robot (8), preferably with an articulated arm robot, from a transfer interface (6) for transferring the at least partially prefabricated or unfabricated cable (5).

3. The method according to claim 2, wherein removing (610) an at least partially prefabricated cable (5) comprises removing a cable (5) cut to a certain length from the transfer interface (6) of a cable cutting machine (9.1).

4. The method according to claim 2 or 3, wherein after removing (610) the cable (5) from the transfer interface (6), the method further comprises fabricating (611) at least one at least partially prefabricated or an unfabricated end (7) of the cable (5), for which purpose the cable end (7) is fed with the robot (8) to a cable finishing machine (9.2) and is removed therefrom again after the cable finishing has been carried out.

5. The method according to any one of the preceding claims, wherein the automated wiring (600) comprises sequentially producing (620) a plurality of individually prefabricated cables in the wiring order with which the electrical components (3) are wired, and providing (100) the individually prefabricated cables (5) via a transfer interface (6) for providing prefabricated cables (5).

6. The method according to claim 5, wherein simultaneously with a first wiring step, in which a first electrical connection between two of the electrical components (3) is produced with a first of the individually prefabricated cables, a second individually prefabricated cable (5) is produced for a second wiring step immediately following the first and is provided via the transfer interface (6).

7. The method according to any one of claims 2 to 4, wherein the removing (610) comprises gripping (630) a first prefabricated cable end (7) of the prefabricated cable (5) with the robot (8) and supplying (640) and electrically contacting (650) the first prefabricated cable end (7) at a cable connection point of a first of the electrical components (3).

8. The method according to claim 7, wherein after contacting (650) the first prefabricated cable end (7), the second prefabricated cable end (7) of the cable (5) is supplied to a cable connection point of a second of the electrical components (3) and contacted at the same.

9. The method according to claim 7, wherein supplying (640) and contacting (650) the first and the second cable end (7) is carried out with the same robot (8), for which purpose the robot (8) releases or releases the prefabricated cable (5) at a gripper with which it has gripped the first cable end of the cable (5), after the first cable end (7) has been contacted, in order to subsequently transport the prefabricated cable (5) from the first to the second cable end (7) through the gripper, in order to subsequently grip (630) the second prefabricated cable end.

10. The method according to claim 5, wherein sequentially producing (620) a plurality of individually prefabricated cables (5) in the wiring order comprises producing (620) the individually prefabricated cables (5) with at least one cable fabrication machine (9), wherein the method further comprises sequentially transferring (622) the plurality of individually prefabricated cables via a transfer interface (6) to the at least one robot (8), preferably to the at least one articulated arm robot.

11. The method according to claim 1, wherein the automated wiring (600) comprises prefabricating (601) a plurality of cables (5) in the wiring order and according to the wiring information, for which purpose a robot (8), preferably an articulated arm robot, grips an unfabricated or only partially prefabricated first cable end (7), feeds the first cable end to a cable fabrication machine (9), whereupon the first cable end (7) receives a fabrication, preferably a core finishing treatment, and wherein the robot (8) subsequently feeds and contacts the fabricated first cable end (7) to a first of the electrical components (3).

12. The method according to claim 10, wherein the robot (8) after prefabricating (601) the first cable end (7) and before feeding (640) and contacting (650) the first cable end (7) grips the second cable end (7) and feeds it to a cable fabrication machine (9), whereupon the second cable end (7) receives a fabrication, preferably a core finishing treatment.

13. The method according to any one of claims 3 to 13, wherein removing (610) a prefabricated or an unfabricated cable (5) with a robot (8) comprises removing (610) a first cable end (7) of the cable (5) with a first robot (8) and removing (610) a second cable end (7) of the cable (5) with a second robot (8), so that the cable (5) is held at its two ends by different robots (8).

14. The method according to claim 13, wherein the two robots (8) are operated in a master-slave mode until contacting one of the two cable ends, of which the master robot (8) supplies the cable end (7) to be wired first before the other cable end (7) to one of the electrical components (3), while the slave robot (8) tracks (611) the cable end (7) to be wired subsequently.

15. The method according to claim 14, wherein tracking (621) comprises holding the cable end (7) to be wired subsequently while maintaining a minimum distance to a mounting plane of the mounting plate (1) and/or tensioning the cable end (7) to be wired subsequently when the cable is flexible and/or holding the cable end (7) to be wired subsequently under a mechanical pretension.

16. The method according to any one of the preceding claims, wherein the automated wiring (600) comprises, after a cable end (7) has been supplied to an electrical component (3) and has been electrically contacted with the same, carrying out a pull-off control (700), for which purpose a robot (8) engages the contacted cable end (7) with a pull-force-sensitive gripper and loads the cable end (7) with a predetermined pull-off force against a contacting direction of the cable end (7), wherein a proper contacting of the cable end (7) is assumed when the contacting withstands the predetermined pull-off force.

17. The method according to any one of the preceding claims, wherein the wiring information for each wiring of two of the electrical components (3) comprises at least one cable routing, including a cable source coordinate, a cable destination coordinate and a laying path between the cable source coordinate and the cable destination coordinate, and at least one cable quality, preferably a cable length, a cable cross-section, a cable colour, a cable end treatment and/or a cable marking.

18. The method according to any one of the preceding claims, wherein when providing (100) a planning of the switchgear (2), component information from the planning is further provided, preferably at least one dimension and/or contour of the mounting plate (1), a type of at least one of the electrical components (3) or a further component of the electrical switchgear (2), a connection type of at least one of the electrical components (3), a connection coordinate of at least one of the electrical components (3), or a geometry of at least one of the electrical components (3).

## Revendications

1. Procédé pour le câblage de composants électriques (3) d'une installation de commutation électrique (2) disposée sur une plaque de montage (1), qui comprend les étapes suivantes :
- mise à disposition (100) d'un plan d'une installation de commutation -2), qui comprend au moins des informations de localisation et d'orientation concernant une pluralité de composants électriques (3) de l'installation de commutation sur une plaque de montage (1) des informations de câblage concernant une pluralité de câblages électriques (4) entre respectivement deux des composants électriques (3) ;
- relevé optique (400) d'une disposition réelle des composants électriques (3) sur la plaque de montage (1) et comparaison (500) des informations de localisation et d'orientation à la disposition réelle ; et
- câblage automatique (600) des composants électriques (3) dans un ordre de câblage et en fonction des informations de câblage et des informations de localisation et d'orientation comparées,
**caractérisé en ce que** le relevé optique (400) comprend une vérification de la présence de la pluralité de composants électriques (3) de l'installation de commutation, grâce au fait que le relevé optique (400) comprend une reconnaissance des composants de la disposition réelle des composants électriques (3) et une comparaison des composants (3) reconnus avec la pluralité de composants électriques (3) de l'installation de commutation selon le plan,
et dans lequel le procédé comprend en outre l'application (200) d'une routine de vérification aux informations de câblage pour la détermination d'un degré d'automatisation des câblages (4) et, le cas échéant, l'adaptation (300) des informations de câblage pour maximiser le degré d'automatisation, dans lequel le câblage automatisé (600) des composants électriques (3) a lieu en fonction des informations de câblage adaptées.

2. Procédé selon la revendication 1, dans lequel le procédé automatisé (600) comprend le retrait (610) d'un câble (5) au moins partiellement pré-confectionné ou non confectionné, avec un robot (8), de préférence avec un robot à bras articulé, d'une interface de transfert (6) pour le transfert du câble (5) au moins partiellement pré-confectionné ou non confectionné.

3. Procédé selon la revendication 2, dans lequel le retrait (610) d'un câble (5) au moins partiellement pré-confectionné ou non confectionné comprend le retrait d'un câble (5) coupé à une longueur déterminée de l'interface de transfert (6) d'un automate de coupe de câble (9.1).

4. Procédé selon la revendication 2 ou 3, dans lequel, après le retrait (610) du câble (5) de l'interface de transfert (6), le procédé comprend en outre la confection (611) d'au moins une extrémité (7) au moins partiellement pré-confectionnée ou non confectionnée du câble (5), l'extrémité du câble (7) étant pour cela introduite, avec le robot (8), dans un automate de traitement d'extrémité de câble (9.2) et est retirée à nouveau de celui-ci une fois le traitement de l'extrémité du câble effectué.

5. Procédé selon l'une des revendications précédentes, dans lequel le câblage automatisé (600) comprend la fabrication séquentielle (620) d'une pluralité de câbles pré-confectionnés individuellement dans l'ordre de câblage dans lequel les composants électriques (3) sont câblés, et la mise à disposition (100) des câbles pré-confectionnés individuellement (5) par l'intermédiaire d'une interface de transfert (6) pour la mise à disposition de câbles pré-confectionnés (5).

6. Procédé selon la revendication 5, dans lequel, en même temps qu'une première étape de câblage, dans lequel, avec un premier câble pré-confectionné individuellement, une première liaison électrique est établie entre deux des composants électriques (3), un deuxième câble pré-confectionné individuellement (5) est fabriqué pour une deuxième étape de câblage suivant immédiatement la première étape de câblage et est mis à disposition par l'intermédiaire de l'interface de transfert (6).

7. Procédé selon l'une des revendications 2 à 4, dans lequel le retrait (610) comprend la préhension (630) d'une première extrémité de câble pré-confectionnée (7) du câble pré-confectionné (5) avec le robot (8) et l'introduction (640) ainsi que la mise en contact électrique (650) de la première extrémité de câble pré-confectionnée (7) au niveau d'un endroit de raccordement de câble d'un premier des composants électriques (3).

8. Procédé selon la revendication 7, dans lequel, après la mise en contact (650) de la première extrémité de câble pré-confectionnée (7), la deuxième extrémité de câble pré-confectionnée (7) du câble (5) est introduite à un endroit de raccordement de câble d'un deuxième des composants électriques (3) et mise en contact avec celui-ci.

9. Procédé selon la revendication 7, dans lequel l'introduction (640) et la mise en contact (650) du premier et du deuxième câbles (7) sont effectuées avec le même robot (8), le robot (8) libérant ou relâchant, pour cela, le câble pré-confectionné (5), au niveau d'un préhenseur, avec lequel il a saisi la première extrémité de câble du câble (5), après que la première extrémité de câble (7) a été mise en contact, afin de transporter ensuite le câble pré-confectionné (5) à travers le préhenseur de la première à la deuxième extrémité de câble (7), afin de saisir (630) ensuite la deuxième extrémité de câble pré-confectionnée.

10. Procédé selon la revendication 5, dans lequel la fabrication séquentielle (620) d'une pluralité de câbles pré-confectionnés individuellement (5) comprend, dans l'ordre de câblage, la fabrication (620) des câbles pré-confectionnés individuellement (5) avec au moins un automate de confection de câbles (9), dans lequel le procédé comprend en outre le transfert séquentiel (622) de la pluralité de câbles pré-confectionnés individuellement par l'intermédiaire d'une interface de transfert (6) sur l'au moins un robot (8), de préférence sur l'au moins un robot à bras articulé.

11. Procédé selon la revendication 1, dans lequel le câblage automatisé (600) comprend la pré-confection (601) d'une pluralité de câbles (5) dans l'ordre de câblage et en fonction des informations de câblage, un robot (8), de préférence un robot à bras articulé, saisissant, pour cela, une première extrémité de câble non confectionnée ou pré-confectionnée seulement partiellement (7), introduit la première extrémité de câble dans un automate de confection de câbles (9), la première extrémité de câble (7) obtenant alors une confection, de préférence un traitement d'extrémité du fil, et dans lequel le robot (8) introduit ensuite la première extrémité de câble pré-confectionnée (7) dans un premier des composants électriques (3) et la met en contact avec celui-ci.

12. Procédé selon la revendication 10, dans lequel le robot (8), après la pré-confection (601) de la première extrémité de câble (7) et avant l'introduction (640) et la mise en contact (650) de la première extrémité de câble (7), saisit la deuxième extrémité de câble (7) et l'introduit dans un automate de confection de câbles (9), la deuxième extrémité de câble (7) obtenant alors une confection, de préférence un traitement d'extrémité de fil.

13. Procédé selon l'une des revendications 3 à 13, dans lequel le retrait (610) d'un câble pré-confectionné ou non confectionné (5) avec un robot (8) comprend le retrait (610) d'une première extrémité de câble (7) du câble (5) avec un premier robot (8) et le retrait (610) d'une deuxième extrémité de câble (7) du câble (5) avec un deuxième robot (8), de sorte que le câble (5) est maintenu, à ses deux extrémités, par des robots différents (8).

14. Procédé selon la revendication 13, dans lequel les deux robots (8) fonctionnent, jusqu'à la mise en contact d'une des deux extrémités du câble, dans un mode maître-esclave, le robot maître (8) introduisant l'extrémité de câble (7), à câbler d'abord avant l'autre extrémité de câble (7), d'un des composants électriques (3), tandis que le robot esclave (8) guide (611) l'extrémité du câble (7) à brancher ensuite.

15. Procédé selon la revendication 14, dans lequel le guidage (621) comprend le maintien de l'extrémité du câble (7) à brancher ensuite en respectant une distance minimale par rapport à un plan de montage de la plaque de montage (1) et/ou la tension de l'extrémité du câble (7) à brancher ensuite, lorsque le câble est flexible, et/ou le maintien de l'extrémité du câble (7) à brancher ensuite sous une précontrainte mécanique.

16. Procédé selon l'une des revendications précédentes, dans lequel le câblage automatisé (600), après qu'une extrémité de câble (7) a été introduite dans un composant électrique (3) et mise en contact avec celui-ci, comprend la réalisation d'un contrôle d'arrachage (700), le robot (8) entrant pour cela en contact, au moyen d'un préhenseur sensible à une force de traction, avec l'extrémité de câble (7) mise en contact et sollicite l'extrémité de câble (7) avec une force d'arrachage prédéterminée à l'encontre d'une direction de mise en contact de l'extrémité de câble (7), dans lequel une mise en contact correcte de l'extrémité de câble (7) est supposée lorsque le contact résiste à la force d'arrachage prédéterminée.

17. Procédé selon l'une des revendications précédentes, dans lequel les informations de câblage comprennent, pour chaque câblage de deux des composants électriques (3), au moins un routage de câble, comprenant une coordonnée source de câble, une coordonnée cible de câble et un trajet de déplacement entre la coordonnée source de câble et la coordonnée cible de câble, et au moins une qualité de câble, de préférence une longueur de câble, une section transversale de câble, une couleur de câble, un traitement d'extrémité de fil et/ou un marquage de câble.

18. Procédé selon l'une des revendications précédentes, dans lequel, lors de la mise à disposition (100) d'un plan de l'installation de commutation (2), des informations de composants provenant du plan sont également mises à disposition, de préférence au moins une dimension et/ou un contour de la plaque de montage (1), un type d'au moins un des composants électriques (3) ou d'un autre composant de l'installation de commutation électrique (2), un type de raccordement d'au moins un des composants électriques (3), une coordonnée de raccordement d'au moins un des composants électriques (3) ou une géométrie d'au moins un des composants électriques (3).
